Europäisches Patentamt

European Patent Office

Office européen des brevets

(11) Publication number: **0 483 457 A1**

## EUROPEAN PATENT APPLICATION

(21) Application number: **91110918.9**

(22) Date of filing: **02.07.91**

(51) Int. Cl.5: **F02B 19/02**

(30) Priority: **31.10.90 IT 8563390**

(43) Date of publication of application:
**06.05.92 Bulletin 92/19**

(84) Designated Contracting States:
**AT BE CH DE ES FR GB IT LI NL SE**

(71) Applicant: **Saggiorato, Girolamo**
**Via Ponovo, 1**
**I-36045 Lonigo (VI)(IT)**

(72) Inventor: **Saggiorato, Girolamo**
**Via Ponovo, 1**
**I-36045 Lonigo (VI)(IT)**

(74) Representative: **Bonini, Ercole**
**c/o STUDIO ING. E. Bonini SAS 8 Corso**
**Fogazzaro**
**I-36100 Vicenza(IT)**

(54) **Device for the shortering of the delay in the ignition of a diesel engine with indirect infection.**

(57) The present invention discloses a device for the shortening of the ignition delay in an indirect diesel engine and comprising a shutter (11) positioned transversally in relation to each supply duct (8) connecting the combustion chamber (6) with the pre-combustion chamber (7). Said shutter intercepts the supply duct whenever the thrust exerted on it by the pressure existing in the combustion chamber is lower than the thrust of an elastic element (14) positioned at its rear end, while the same shutter permits the instantaneous flow of the compressed fluid from the combustion chamber into the pre-combustion chamber, whenever the thrust exerted on it by the pressure existing in the supply duct exceeds the thrust of the elastic element of the shutter.

FIG. 2

Rank Xerox (UK) Business Services
(-/2.18/2.1)

EP 0 483 457 A1

The invention discloses a device to shorten the ignition delay of a diesel engine with indirect ignition.

It is a known fact that in the engines wherein the ignition occurs by compression the fuel injection begins before the piston has reached its top dead center and it lasts for a certain period of time during which the crankshaft turns by an angle which may reach up to 35 degrees. Since the compressed air which is present in the pre-combustion chamber has a temperature which is lower than the ideal combustion temperature, because the ideal pressures are reached only at the top dead center, the combustion begins locally at spots. There is, therefore, no actual flame front, as is the case in engines ignited by spark. There is rather the formation of a plurality of ignition flames from which the combustion spreads to all the fuel which has been injected. The time interval occurring between the instant at which the fuel injection begins and the intance at which the ignition begins is called ignition delay.

If the ignition delay is long, during this time span a large quantity of fuel is accumulated in the combustion chamber and when it is burnt it produces much pressure. In order to express this phenomenon, it is said that the engine runs "roughly". It may happen, even, that, when the delay is particularly long, such a large amount of fuel accumulates that the pressure increase is almost instantaneous. Under these conditions the running roughness of the engine reaches its maximum.

In order to prevent the engine from running roughly it becomes necessary for the combustion to begin as soon as possible after the injection has begun; in other words it becomes necessary to reduce to a minimum the ignition delay, in order to prevent a too large amount of fuel from accumulating in the chamber before the first little drop is ignited. It becomes obvious that by reducing the ignition delay, as a consequence, the injection advance is also shortened. The final result is a less violent explosion which, as has already been said, permits a less rough running of the engine and also a better efficiency of the same.

In order to shorten the ignition delay, it is possible to act on any of several parameters, such as, for instance:
- the degree of atomization of the fuel;
- the air temperature;
- the air turbulence
- the stoichiometric ratio between air and fuel.

Various devices are known, which by acting on one or more of the above-listed parameters, are able to decrease the running roughness of the engine. In any case, the results obtained with said devices solve the problem only partially, since the shortnening of the ignition delay is rather limited and, therefore, the running roughness of the engine is only slightly decreased.

It is the purpose of the present invention to disclose a device which, by acting simultaneously on both the temperature of the comburant air and on the turbulence of the fuel mixture, makes it possible to considerably shorten the ignition delay in an indirect diesel engine.The above-mentioned purpose is fulfilled by a device meant to shorten the ignition delay in an indirect diesel engine, comprising:
- at least one piston sliding axially within a cylinder obtained in the engine block;
- a combustion chamber obtained in the engine block and arranged in its upper part near each cylinder and co-axial with it
- a pre-combustion chamber obtained in the engine cylinder head;
- supply ducts, each connected both with a combustion chamber and with its corresponding pre-combustion chamber;
- at least one injector positioned in each pre-combustion chamber, which, in accordance with the main claim, is characterized in that it comprises a shutter, arranged transversally in relation to each supply duct, is sealed and slides within a seat obtained in the engine cylinder head,

wherein said shutter intercepts the supply duct whenever the thrust exerted on the shutter by the pressure existing in the combustion chamber is lower than the thrust of an elastic element positioned at the rear end of the shutter, while the same shutter permits the instantaneous flowing of the compressed fluid from the combustion chamber to the pre-combustion chamber, whenever the thrust of the pressure existing in the duct exceeds the thrust of the elastic element of the shutter.

According to a preferred embodiment the shutter consists of a cylinder presenting a tapered end, which acts as a seal when resting against a corresponding seat having the shape of a truncated cone which is present in the supply duct and which connects the pre-combustion chamber with the combustion chamber. The shutter slides within a seat having a labyrinth seal obtained within the engine cylinder head and it is pushed from its rear by a spring which can be calibrated. A counter-pressure hydraulic system, consisting of a tank containing oil under pressure and by ducts for the connection with the shutter seat, prevents sudden return movements of the shutter against sealing seat having the shape of a truncated cone during its closing phase.

Advantageously the device according to the invention permits the decrease of the running roughness of the engine and also its improved efficiency. In fact, during the compression phase the shutter intercepts the supply duct which connects the combustion chamber with the pre-combustion chamber, so that, during the compression phase, the pre-combustion chamber is shut off. Finally, when the piston reaches its top dead center, the shutter opens the duct and air streams into the pre-combustion chamber with a strong vorticosity and its temperature is the one that has been reached at the top dead center and is, therefore, ideal for the ignition of the diesel fuel.

Further scope of applicability of the present invention will become more apparent from the detailed description given hereinafter. However, it should be understood that the detailed description and specific example, while indicating a preferred embodiment of the invention, are given by way of illustration only, since various changes and modifications within the spirit and scope of the invention will become apparent to those skilled in the art from this detailed description and from the drawings, wherein:

- Fig. 1 shows the device according to the invention with the supply duct connecting the pre-combustion chamber with the combustion chamber intercepted by the shutter in its closed position;
- Fig. 2 shows the device of Fig. 1 with the shutter in its open position.

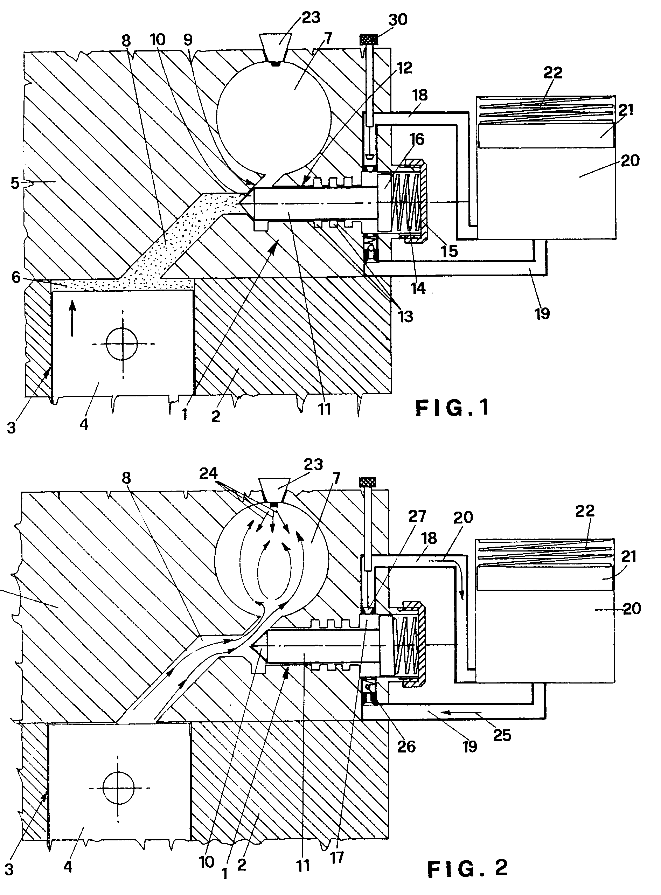

As can be observed in Fig. 1 and Fig. 2, the device according to the invention, which is indicated as a whole with 1, is applied to an indirect diesel engine consisting of a block 2, housing cylinder 3 within which piston 4 slides, and of a cylinder head 5, within which a pre-combustion chamber 7 is obtained, which is connected with a combustion chamber 6 through a supply duct 8.

The following description based on the Figs. 1 and 2 representing a single-cylinder engine remains valid also for multi-cylinder engines.

The supply duct 8 presents in its intermediate position a seat 9 in the shape of a truncated cone, suited to lodge the tapered end 10 of a shutter 11 sliding within a housing 12 with a labyrinth seal 13, preferably obtained within the cylinder bead 5. The tapered end 10 of shutter 11 is closed against the corresponding seat 9 in the sahpe of a truncated cone, since it is pushed against said seat by the pressure of a spring 14 positioned at the rear end 16. This spring can be calibrated by means of the threaded closing lid 15. Said end 16 creates within the housing 12, within which the shutter slides, an annular chamber 17 which, through an upper duct 18 and a lower duct 19 is connected with a tank 20 containing oil. Said oil is kept under a slight pressure by the presence of piston 21 on which a spring 22 exerts through it and directly on the oil an amount of pressure corresponding with the degree of compression of spring 22.

While the engine is running, the pressure of spring 14 counteracts the thrust on the tapered end 10 of shutter 11 due to the pressure exerted by piston 4 on the air contained within the combustion chamber 6 during the upward compression stroke. Spring 14 is calibrated so that, when piston 4 comes close to the top dead center, corresponding with the angular position of the crankshaft matching the desired injection advance, the pressure in the combustion chamber 6 generates on the tapered end 10 of the shutter a force which exceeds the calibration value of spring 14. Thus the shutter 11 moves backward and positions itself as shown in Fig. 2, so that the pre-combustion chamber 7 is connected with the combustion chamber 6 through the supply duct 8.

In this situation the air contained within the combustion chamber 6, whose pressure and temperature conditions are ideal for the ignition and correspond with the volume of the combustion chamber 6 increased by part of the volume of the supply duct 8, but with the exclusion of the volume of the pre-combustion chamber 7, enters instantaneously into the pre-combustion chamber 7 with a strong turbulence. This strong turbulence is generated not only by the shape of the pre-combustion chamber, but also particularly by the sudden opening of shutter 11, and it is far stronger than the turbulence generated in compression engines with indirect ignition, wherein the pressure increase within the pre-combustion chamber 7 occurs gradually during the entire upward stroke of piston 4. At this point injector 23 begins its operation. It sprays into the pre-combustion chamber 7 the finely atomized fuel 24, so that the ignition of the fuel mixture begins within the pre-combustion chamber 7. The combustion fumes acting on piston 4, push it downwards, thereby generating the torque which is transmitted to the engine shaft and, as a consequence, to the wheels.

It is interesting to observe that, thanks to the instantaneousness of the opening movement of shutter 11 and to the strong vorticity with which the compressed air from the combustion chamber 6 enters into the pre-combustion chamber 7, the ignition of the fuel mixture occurs almost instantaneously. It is, therefore, possible by adequately calibrating spring 14, to cause the backward movement of shutter 11 by means of the pressure within the combustion chamber 6 and the supply duct 8, immediately before the injection moment, thereby reducing to the lowest degree the ignition delay.

When within the pre-combustion chamber 7, the duct 8 and the combustion chamber 6 the pressure reaches such a value that the force it exerts on the end 10 of shutter 11 is lower than the elastic force created by spring 14, shutter 11 goes back to its closed position against its seat 9 having the shape of a truncated cone. This closing movement, however, does not occur quickly because the oil contained in tank 20 has penetrated into the annular chamber 17 during the backward movement of shutter 11. In fact, it has been enticed to flow along duct 19 by the volume increase and by the consequent decrease in pressure which has occurred within the annular chamber 17, when the rear end 16 of shutter 11 has begun its backward movement. The oil has filled chamber 17 after flowing through duct 19 following the direction of arrow 25 and winning the contrast of the unidirectional valve 26. When shutter 11 resumes its closed position because of the pushing action of spring 14, the oil contained in the annular chamber 17 is pushed into duct 18, because at this instant its pressure is higher than the calibration value of the unidirectional valve 27 which is positioned in duct 18 and can be calibrated through the pawl 30. From there the oil flows back into tank 20 following the direction of arrow 28. This delay of the closing movement makes it possible for all the combustion products to be discharged from the pre-combustion chamber into the combustion chamber.

The flow 28 through duct 18 stops when the tapered end 10 of shutter 11 is again flush against its seat 9 having the shape of a truncated cone.

On the basis of what has been described it can be understood that the device according to the invention fulfils the proposed purposes. It has been seen how, through shutter 11 and the adequate calibration of spring 14 which pushes it against its seat 9 having the shape of a truncated cone and being positioned within each supply duct 8, it is possible to obtain near the top dead center the sudden connection between the combustion chamber 6 and the pre-combustion chamber 7, thereby causing at the interior of the latter a strong swirling movement of the compressed air, which also presents the temperature conditions which are ideal to receive the atomized diesel oil and to cause its ignition. This makes it possible to shorten the ignition delay and, as a consequence, also the injection advance to the advantage of a less rough running and of an improved efficiency of the engine.

During the manufacturing process of the device changes and modifications will occur to those skilled in the art. Said changes and modifications will, however, not exceed the scope and spirit of the present invention, such as it is claimed hereinafter.

**Claims**

1. A device for shortening the ignition delay in a diesel engine with indirect ignition, comprising:
   - at least one piston (4) sliding axially within a cylinder (3) obtained in the engine block (2);
   - a combustion chamber (6) made in the cylinder head of the engine and positioned in the upper part of the engine block near each cylinder and co-axial with it;
   - a pre-combustion chamber (7) made in the cylinder head;
   - supply ducts (8) each connected both with a combustion chamber (6) and with its corresponding pre-combustion chamber (7);
   - at least an injector (23) positioned in each pre-combustion chamber,
   characterized in that it comprises a shutter (11), arranged transversally in relation to each supply duct (8), sliding and being sealed within a seat (12) made in the cylinder head of the engine, wherein said shutter (11) intercepts the supply duct (8) whenever the thrust on said shutter exerted by the pressure existing in the combustion chamber (6) is lower than the thrust exerted by an elastic element (14) positioned at the rear end of the shutter, while this same shutter (11) permits the instantaneous flow of the compressed fluid from the combustion chamber (6) to the pre-combustion chamber (7) whenever the thrust exerted by the pressure existing in the duct (8) exceeds the thrust of the elastic element (14) of the shutter (11).

2. A device according to claim 1, characterized in that the shutter (11) presents its front part (10) having a tapered shape which matches a corresponding seat (9) having the shape of a truncated cone belonging to the supply duct (8), thereby producing the sealed interception of the supply duct itself.

3. A device according to claim 1, characterized in that the elastic element (14) positioned at the rear end (16) of the shutter (11) is a spring.

4. A device according to claim 1, characterized in that the shutter (11) is positioned within a seat (12) obtained in the cylinder head of the engine, its rear end (16) forming within said seat an annular chamber (17) which is connected through ducts (18;19) with a single tank (20) containing oil under pressure.

5. A device according to claim 4, characterized in that each duct (18;19) presents in its interior a unidirectional valve (27;26), said unidirectional valve being arranged within one duct in such a way, that it only permits the oil to flow out of the tank (20) and being arranged so within the other duct, that it only permits the oil to flow into the same tank.

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | BE-A-364 612 (N. OBRAM)<br>* page 2, line 8 - line 12 *<br>* page 2, line 28 - page 3, line 8; figure *<br>--- | 1,3 | F02B19/02 |
| Y | FR-A-2 342 399 (CHRYSLER FRANCE)<br>* page 1; figure *<br>--- | 1-3 | |
| Y | NL-C-81 021 (A.C. VAN DOORN)<br>* column 2, line 33 - line 46; figure *<br>--- | 1-3 | |
| A | US-A-4 846 125 (HAREYAMA ET AL.)<br>* column 1, line 6 - column 2, line 18; figure 1 *<br><br>----- | 1 | |
| | | | TECHNICAL FIELDS SEARCHED (Int. Cl.5 )<br><br>F02B |

The present search report has been drawn up for all claims

| Place of search | Date of completion of the search | Examiner |
|---|---|---|
| THE HAGUE | 13 FEBRUARY 1992 | ALCONCHEL Y UNGRIA J |